Europäisches Patentamt

(19) European Patent Office

Office européen des brevets

(11) Numéro de publication: **0 109 333**
**B1**

(12) **FASCICULE DE BREVET EUROPEEN**

(45) Date de publication du fascicule du brevet: **24.02.88**

(21) Numéro de dépôt: **83402138.8**

(22) Date de dépôt: **03.11.83**

(51) Int. Cl.⁴: **F 16 M 11/08,** A 47 B 81/06, A 47 F 5/02

(54) Pivot orientable, notamment pour téléviseur.

(30) Priorité: **10.11.82 FR 8218898**

(43) Date de publication de la demande:
**23.05.84 Bulletin 84/21**

(45) Mention de la délivrance du brevet:
**24.02.88 Bulletin 88/08**

(84) Etats contractants désignés:
**CH DE GB IT LI NL**

(56) Documents cités:
**FR-A-1 362 637**
**FR-A-1 500 141**
**FR-A-1 597 029**
**FR-A-2 330 949**
**FR-A-2 339 772**
**FR-A-2 368 636**
**FR-C-908 015**
**US-A-2 237 281**
**US-A-2 830 862**
**US-A-2 905 421**
**US-A-3 396 932**
**Einbaubeispiele für INA-Wälzlager (1974) Seite 105**
**Nadella-plans de montages de Roulements à Aiguilles (1977) page 20**

(73) Titulaire: **NADELLA**
**16 Avenue de la République**
**F-92503 Rueil Malmaison (FR)**

(72) Inventeur: **Durivault, Jean**
**7 bis, Rue Voltaire**
**F-18100 Vierzon (FR)**
Inventeur: **Branche, Bernard**
**62 Rue Anatole France**
**F-18100 Vierzon (FR)**

(74) Mandataire: **Bressand, Georges et al**
**c/o CABINET LAVOIX 2 Place d'Estienne d'Orves**
**F-75441 Paris Cedex 09 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 109 333 B1

## Description

La présente invention est relative à un pivot notamment pour téléviseur et se rapporte plus particulièrement à un pivot orientable.

Les appareils récepteurs de télévision sont souvent disposés sur des meubles orientables spécialement conçus à cet effet tels que des tables à roulettes.

De telles tables ne présentent pas toujours une esthétique s'harmonisant avec le décor de la pièce où se trouve le téléveur.

Par ailleurs elles sont relativement encombrantes et d'un prix de revient élevé.

Le brevet US 3 396 932 contenant les caractéristiques du préambule de la revendication 1 décrit un présentoir tournant qui est entraîné par frottement de roulement à l'aide d'un moteur et qui peut être facilement immobilisé à la main. Il comprend un plateau qui est muni sur chacune de ses faces d'une couronne périphérique de billes et qui est interposé entre un socle et une table de présentation.

Le brevet FR 908 015 décrit une rotule pour pied photographique qui comprend un frein entre son embase et son plateau panoramique.

Aucun de ces documents, qui relèvent de secteurs techniques distincts et différents de celui de l'invention, ne décrit de solution qui convienne au problème visé par l'invention.

L'invention vise à créer un pivot orientable présentant un encombrement réduit et qui soit peu coûteux et facile à monter.

L'invention a pour objet un pivot orientable notamment pour téléviseur du type exposé dans le préambule de la revendication principale et dont les particularités sont indiquées dans le reste des revendications.

D'autres caractéristiques de l'invention apparaîtront au cours de la description qui va suivre faite en se référant aux dessins annexés, donnés uniquement à titre d'exemple et dans lesquels:

— la Fig. 1 est une vue en élévation, en coupe d'un premier mode de réalisation du pivot orientable suivant l'invention;

— la Fig. 2 est une vue analogue à la Fig. 1 d'un autre mode de réalisation du pivot orientable suivant l'invention.

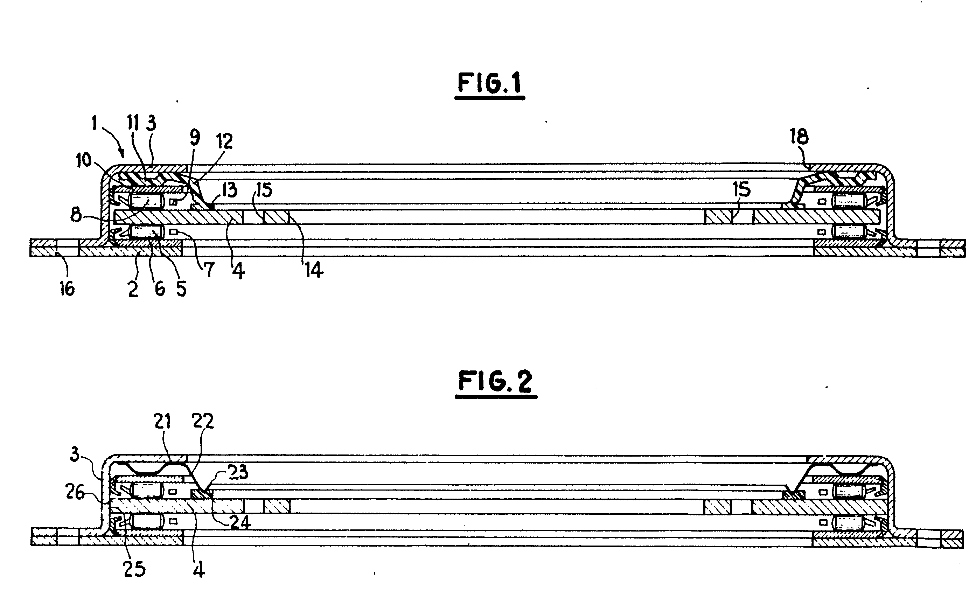

Le pivot orientable représenté à la Fig. 1 est essentiellement constitué par un boîtier 1 comportant une plaque annulaire 2 formant embase et un couvercle creux 3 destiné à être fixé sur la plaque 2.

Dans le boîtier ainsi constitué est monté à rotation un plateau de support métallique annulaire 4. Le montage du plateau 4 est assuré par l'intermédiaire d'une première série d'aiguilles ou de rouleaux 5 disposés entre la surface inférieure du plateau 4 et une plaque de roulement 6 en contact avec l'embase 2. Les aiguilles 5 sont maintenues dans une cage 7. La surface supérieure du plateau de support 4 est en contact avec une seconde série d'aiguilles ou de rouleaux 8 montés dans une cage 9. Une plaque de roulement 10 est maintenue en contact avec les rouleaux 8 au moyen d'une pièce élastique 11 interposée entre la plaque de roulement 10 et la paroi du couvercle creux 3. La pièce élastique 11 est réalisée en polyamide. Elle assure à l'ensemble une certaine précontrainte et supprime ainsi tout jeu entre les divers éléments du pivot. La pièce élastique 11 présente une lèvre axiale 12 qui se trouve en contact de frottement avec le plateau de support 4. Dans l'exemple représenté à la Fig. 1, cette lèvre 12 se termine par un patin annulaire 13 qui frotte contre la paroi supérieure du plateau de support 4.

Ainsi la pièce élastique 11, outre qu'elle assure le rattrapage de jeu précité, joue le rôle d'une part, d'éléments d'étanchéité et d'autre part, de frein assurant l'immobilisation en rotation du plateau 4 par rapport au boîtier 1 du pivot dans toutes les positions angulaires du plateau 4.

Le plateau de support 4 présente un orifice central 14 et des trous 15 de fixation d'une pièce intermédiaire non représentée telle que par exemple une entretoise ou une colonne rendue solidaire d'un téléviseur.

La plaque 2 formant embase et le couvercle 3 du boîtier 1 comportent des rebords périphériques dans lesquels sont ménagés des trous 16 de fixation du pivot sur un support fixe.

Le couvercle 3 est fixé sur la plaque 2 par soudage par points entre les trous de fixation 16. Ainsi, la pièce élastique 11 est précontrainte lors de cette opération d'assemblage par soudage.

Le couvercle 3 présente un orifixe central de grand diamètre 18 pour le passage de la pièce de liaison intermédiaire entre le plateau de support 4 et le téléviseur à supporter.

Le pivot orientable pour téléviseur représenté à la Fig. 2 est semblable à celui de la Fig. 1 à l'exception de la pièce élastique de rattrapage de jeu.

En effet, dans le mode de réalisation de la Fig. 2, cette pièce élastique 21 est une pièce métallique, en acier ou en bronze à ressort. La lèvre axiale 22 de la pièce élastique 21 se termine par un rebord rabattu 23 et un anneau 24 en une matière présentant un coefficient de frottement approprié du type par exemple utilisé dans les garnitures de frein, est interposé entre le rebord 23 et la face supérieure du plateau de support 4.

En outre, afin de supprimer tout risque de jeu radial du plateau de support 4 par rapport au couvercle 3, le diamètre du plateau 4 est choisi de manière à s'ajuster avec un jeu minimal dans le couvercle 3.

La fonction de palier radial est assurée par la coopération de la surface 25 de chant du plateau 4 et la surface 26 du couvercle 3 qui peuvent si nécessaire recevoir des traitements de surface appropriée.

Les pivots orientables pour téléviseur qui viennent d'être décrits permettent d'obtenir une manoeuvre aisée de pivotement du téléviseur qu'ils supportent. Ce résultat est obtenu grâce à l'utilisation d'une butée formée par le plateau 4, les deux séries d'éléments de roulement 5 et 8 et les plaques de roulement 6 et 10.

Par ailleurs, la présence d'un organe de freinage permet l'obtention d'une bonne stabilité de position du téléviseur en évitant que le moindre perturbation dans l'environnement de celui-ci ne provoque un changement de position.

Dans les modes de réalisation qui viennent d'être décrits, le plateau 4 est destiné à être fixé au téléviseur à supporter.

On peut cependant envisager un montage inversé dans lequel le boîtier 1 serait fixé au téléviseur ou à une pièce intermédiaire tandis que le plateau 4 serait fixé sur un support fixe.

Dans un tel cas, la pièce élastique de rattrapage de jeu et de freinage serait montée entre la plaque 2 formant embase et la plaque de roulement 6.

## Revendications

1. Pivot orientable, notamment pour téléviseur, comprenant un boîtier (1) et un plateau de support (4) monté à rotation dans ledit boîtier, par l'intermédiaire de deux séries d'éléments de roulement (5, 8) disposés de part et d'autre du plateau de support (4) à la périphérie de celui-ci, caractérisé en ce qu'il comporte en outre un organe de freinage (12, 13; 22, 23, 24) qui est équipé d'un élément axial (12; 22) associé au boîtier (1) et en contact de frottement avec une surface du plateau de support (4).

2. Pivot orientable suivant la revendication 1, caractérisé en ce que le boîtier comprend deux plaques de roulement (6, 10) qui reposent chacune contre le côté des éléments de roulement (5, 8) de chaque série qu est opposé à celui qui porte contre le plateau de support (4) et une pièce élastique de suppression de jeu (11, 21) disposée entre le boîtier (1) et l'une des plaques de roulement (6, 10) connu en soi et en ce que cet élément axial (12; 22) fait partie de ladite pièce élastique (11; 21).

3. Pivot orientable suivant la revendication 2, caractérisé en ce que ladite pièce élastique (11) est en matière plastique et cet élément axial (12) de celle-ci se termine par un patin (13) qui frotte contre la surface du plateau de support (4).

4. Pivot orientable suivant la revendication 2, caractérisé en ce que ladite pièce élastique (21) est en acier ou en bronze à ressort et cet élément axial (22) de celle-ci se termine par un rebord rabattu (23), un anneau (24) en une matière présentant un coefficient de frottement approprié étant interposé entre ledit rebord (23) et la surface du plateau de support (4).

5. Pivot orientable suivant l'une des revendications 1 à 4, caractérisé en ce que ledit boîtier (1) comporte une plaque (2) formant embase et un couvercle creux (3), le diamètre du plateau de support (4) étant tel que le plateau pénètre avec un jeu minimal dans ledit couvercle, la surface de chant (25) du plateau (4) et la surface en regard (26) du couvercle (3) coopèrant pour former un palier radial.

## Patentansprüche

1. Orientbare Stütze, insbesondere für Fernsehgeräte, mit einem Gehäuse (1) und einer Trägerplatte (4), die drehbar in dem Gehäuse über zwei Gruppen von Rollelementen (5, 8) angeordnet ist, die zu beiden Seiten der Trägerplatte (4) an dessen Peripherie angeordnet sind, gekennzeichnet durch ein Bremsorgan (12, 13; 22, 23, 24), das mit einem Axialelement (12; 22) ausgerüstet ist, das am Gehäuse (1) angeordnet ist und in Reibkontakt mit einer Oberfläche der Trägerplatte (4) steht.

2. Orientierbare Stütze nach Anspruch 1, dadurch gekennzeichnet, daß das Gehäuse zwei Rollplatten (6, 10) aufweist, die jeweils auf der Seite der Rollemenete (5, 8) jeder Gruppe liegen, die der gegenüberliegt, die gegen die Trägerplatte (4) anliegt und ein elastisches Spielverhinderungsorgan (11, 21), das zwischen dem Gehäuse (1) und einer der Rollplatten (6, 10) ist und an sich bekannt ist und dadurch, daß dieses Axialelement (12; 22) einen Teil dieses elastischen Stücks (11; 21) ausmacht.

3. Orientierbare Stütze nach Anspruch 2, dadurch gekennzeichnet, daß das elastische Stück (11) aus Kunststoff ist und dessen axiales Element (12) in einer Kufe (13) endet, die in Reibschluß mit der Oberfläche der Trägerplatte (4) steht.

4. Orientierbare Stütze nach Anspruch 2, dadurch gekennzeichnet, daß das elastische Stück (21) aus Stahl oder Federbronze besteht und dessen axiales Element (22) in einem umgeschlagenen Rand (23) endet, wobei ein Ring (24) aus einem Material mit geeignetem Reibkoeffizienten zwischen dem Rand (23) und der oberfläche der Trägerplatte (4) zwischengeschaltet ist.

5. Orientierbare Stütze nach einem der Ansprüche 1—4, dadurch gekennzeichnet, daß das Gehäuse (1) eine Platte (2) aufweist, die einen Sockel bildet und einen hohlen Deckel (3), wobei der Durchmesser der Trägerplatte (4) so gewellt ist, daß die Platte mit einem minimalen Spiel in den Deckel eindringt und die Randfläche (25) der Platte (4) und die gegenüberliegende Oberfläche (26) des Deckels (3) miteinander zusammenwirken, um ein radiales Lager zu bilden.

## Claims

1. An orientable pivot, in particular for a television set, comprising a case (1) and a support plate (4) rotatively mounted in said case by means of two series of rolling elements (5, 8) disposed on each side of the support plate (4) on the periphery of the latter, characterized in that it further comprises braking means (12, 13; 22, 23, 24) which is provided with an axial member (12; 22) associated with the case (1) and in rubbing contact with a surface of the support plate (4).

2. An orientable pivot according to claim 1, characterized in that the case comprises two raceway plates (6, 10) each of which bears against the side of the rolling elements (5, 8) of each series which is opposed to that which bears against the support plate (4) and an elastic member for taking up play (11, 21) disposed between the case (1) and one of the raceway plates (6, 10) known *per se* and this axial member (12; 22) is part of said elastic member (11, 21).

3. An orientable pivot according to claim 2, characterized in that said elastic member (11) is of a plastics material and this axial member (12) of the latter terminates in a shoe (13) which rubs against the surface of the support plate (4).

4. An orientable pivot according to claim 2, characterized in that said elastic member (21) is of steel or spring bronze and this axial member (22) of the latter terminates in formed-up flange (23), a ring (24) of a material having a suitable coefficient of friction being interposed between said flange (23) and the surface of the support plate (4).

5. An orientable pivot according to any one of claims 1 to 4, characterized in that said cover (1) includes a plate (2) forming a base member and a hollow cover (3), the diameter of the support plate (4) being such that said support plate extends with minimal clearance into said cover, the edge surface (25) of support plate (4) and the confronting surface (26) of said cover (3) cooperating to form a radial bearing.

## FIG.1

## FIG.2

0 109 333